# EUROPÄISCHE PATENTSCHRIFT

(11) **EP 1 040 079 B1**
(45) Veröffentlichungstag und Bekanntmachung des Hinweises auf die Patenterteilung: **13.06.2001**
(21) Anmeldenummer: 98965829.9
(22) Anmeldetag: 14.12.1998
(51) Int. Cl.: C01B 3/32

(54) **VERFAHREN ZUM BETRIEB EINER ANLAGE ZUR WASSERDAMPFREFORMIERUNG EINES KOHLENWASSERSTOFFS**
METHOD FOR OPERATING A SYSTEM FOR WATER-VAPOR REFORMING OF A HYDROCARBON
PROCEDE D'EXPLOITATION D'UNE INSTALLATION DE REFORMAGE PAR VAPEUR D'EAU D'UN HYDROCARBURE

(30) Priorität: 16.12.1997 DE 19755814
(43) Veröffentlichungstag der Anmeldung: 04.10.2000
(73) Patentinhaber: XCELLSIS GmbH, 73230 Kirchheim / Teck-Nabern (DE)
(72) Erfinder: SCHÜSSLER, Martin, D-89073 Ulm (DE); ZUR MEGEDE, Detlef, 73230 Kirchheim (DE)
(74) Vertreter: Kocher, Klaus-Peter Dipl.-Phys
(86) Internationale Anmeldenummer: EP9808174
(87) Internationale Veröffentlichungsnummer: WO9931012

(56) Entgegenhaltungen:
- EP-A- 0 217 532
- WO-A-96/00186
- DE-A- 4 423 587
- FR-A- 1 417 757
- GB-A- 2 132 108
- PATENT ABSTRACTS OF JAPAN vol. 012, no. 382 (C-535), 12. Oktober 1988 & JP 63 129002 A (HITACHI LTD), 1. Juni 1988 in der Anmeldung erwähnt

## Beschreibung

Die Erfindung bezieht sich auf ein Verfahren zum Betrieb einer Anlage zur Wasserdampfreformierung eines Kohlenwasserstoffs nach dem Oberbegriff des Anspruchs 1, insbesondere auf ein Verfahren zum Betrieb einer mobilen Anlage zur Wasserdampfreformierung von Methanol in einem brennstoffzellenbetriebenen Kraftfahrzeug zur Bereitstellung des für die Brennstoffzellen benötigten Wasserstoffs. Unter dem Begriff Kohlenwasserstoff werden dabei der Einfachkeit halber vorliegend auch Kohlenwasserstoffderivate, wie z.B. Methanol, verstanden.

Bekanntermaßen verläuft die Wasserdampfreformierungsreaktion zur Reformierung von beispielsweise Methanol endotherm und erfolgt bei einer gegenüber Raumtemperatur erhöhten Reaktionsremperatur. Bei einem Kaltstart der Anlage kann daher mit der Wasserdampfreformierungsreaktion nicht sofort Wasserstoff bereitgestellt werden, vielmehr müssen zunächst die Anlagenteile auf eine entsprechende Betriebstemperatur gebracht werden. Gerade im Anwendungsfall von Kraftfahrzeugen besteht jedoch der Wunsch, nach Auslösen eines Startvorgangs des Fahrzeugs und damit auch der Reformierungsanlage möglichst unverzüglich Antriebsleistung durch die Brennstoffzellen zur Verfügung zu haben, was wiederum erfordert, daß die Reformierungsanlage schnellstmöglich Wasserstoff bereitzustellen vermag. Es wurden bereits unterschiedliche Vorgehensweisen für den Kaltstart derartiger Anlagen vorgeschlagen.

So ist es aus der Patentschrift US 4.820.594 bekannt, in einem Reformierungsreaktorgehause neben dem eigentlichen Reformierungsreaktorteil einen Verbrennungsteil vorzusehen, dem beim Kaltstart der Anlage in einer ersten Betriebsphase ein brennbares Kohlenwasserstoff/Luft-Gemisch zugeführt wird, das dort mit offener Flamme verbrannt wird und dadurch den darüberliegenden, reformierungsaktiven Reaktorteil aufheizt. Nach Erreichen einer geeigneten Temperatur wird dann die Reformierungsreaktion gestartet.

Bei einer in der Patentschrift US 5.110.559 beschriebenen Anlage zur Wasserdampfreformierung eines Kohlenwasserstoffs ist das Reformierungsreaktorgehäuse ebenfalls in einen Brennerteil und einen reformierungsaktiven Reaktorteil aufgeteilt, um beim Kaltstart den reformierungsaktiven Reaktorteil durch den Brennerteil aufzuheizen. Im Brennerteil wird hierzu ein brennbares Gemisch entzündet, das aus dem Reformierungsreaktor stammt, wobei schon beim Kaltstart dem Reformierungsreaktor der zu reformierende, brennbare Kohlenwasserstoff zugeführt wird. Die heißen Verbrennungsabgase werden vom Reformierungsreaktor in einen nachgeschalteten CO-Shiftkonverter weitergeleitet, um diesen damit aufzuheizen und dadurch die Anlage schneller auf Betriebstemperatur zu bringen.

Aus der Patentschrift DE 44 23 587 C2 ist es bekannt, daß in einem mit geeignetem Katalysatormaterial, z.B. Cu/ZnO-Material, befüllten Reformierungsreaktor je nach Steuerung der Zuführung der einzelnen Reaktionspartner in den Reaktor und der dort herrschenden Temperatur Wasserstoff wahlweise mittels partieller Oxidation, die exotherm verläuft, und/oder endothermer Wasserdampfreformierung von Methanol gewonnen werden kann. Bei geeigneter Prozeßführung laufen die beiden Reaktionen parallel ab, wobei ein autothermer Reaktionsablauf einstellbar ist. Aus den dort zitierten Patentschriften FR 1.417.757 und FR 1.417.758 ist es außerdem bekannt, bei einem Kaltstart einer Anlage zur Wasserdampfreformierung von Methanol zunächst ein Gemisch aus Methanol und Oxidationsmittel in den Reformierungsreaktor einzuleiten, um dort eine entsprechende Verbrennungsreaktion stattfinden zu lassen und damit den Reaktor aufzuheizen. Danach wird die Zufuhr des Oxidationsmittels beendet und stattdessen das zu reformierende Methanol-/Wasserdampfgemisch zugeführt und die Wasserdampfreformierungsreaktion gestartet. Der Wasserstoff wird in den dortigen Anlagen mittels selektiver Wasserstoffabtrennung über wasserstoffdurchlässige Membranwandungen bereitgestellt, die in den Reaktor integriert sind.

In der Offenlegungsschrift EP 0 217 532 A1 ist ein Reaktor zur partiellen Oxidation von Methanol beschrieben, der in einer stromaufwärtigen Zone einen kupferhaltigen Katalysator und in einer stromabwärtigen Zone einen Katalysator aus der Platinelementgruppe aufweist. Bei einem Kaltstart gelangt das zugeführte Gemisch aus Methanol und einem sauerstoffhaltigen Gas durch die stromaufwärtige Zone hindurch in die stromabwärtige Zone, wo eine spontane Methanoloxidation auftritt, die zu einer Erhöhung der Temperatur bis zu einem Wert führt, bei dem sich eine partielle Methanoloxidation in der stromaufwärtigen Zone entwikkelt, und zwar nach Art eines "Hot Spot".

In der Offenlegungsschrift WO 96/00186 A1 ist eine selbststartende Wasserstofferzeugungsanlage mit einem Reaktor zur Methanolumsetzung beschrieben, der ebenfalls zum einen ein kupferhaltiges und zum anderen ein Metall der Platinelementgruppe als Katalysatormaterial beinhaltet. Im warmgelaufenen Betrieb erfolgt eine sich selbst aufrechterhaltende partielle Methanoloxidationsreaktion, wobei durch den kupferhaltigen Katalysator eine Zündung einer Oxidationsreaktion des Methanols schon bei Raumtemperatur erreicht werden soll. Außerdem kann im warmgelaufenen Betrieb durch Wasserzufuhr zusätzlich eine Methanolreformierung erfolgen. Um den Kohlenstoffanteil im Produktgas klein zu halten, kann das Produktgas über einen selektiven CO-Oxidationskatalysator oder einen CO-Shiftkatalysator hinweggeleitet werden.

In der Offenlegungsschrift JP 63-129002 (A) ist ein Reaktor zur Methanolumsetzung offenbart, der in Strömungsrichtung aufeinanderfolgend eine Verbrennungskatalysatorzone auf Pd-Basis, eine Zn-Cr-Reformerkatalysatorzone und eine Cu-Zn-Reformerkatalysatorzone aufweist und dem ein Methanol/Wasser-Gemisch sowie Luft zugeführt wird. Im Reformerkatalysatorbereich erfolgt eine Reformierungsreaktion unter Zufuhr von Wärme aus dem benachbarten Verbrennungskatalysatorbett.

Der Erfindung liegt als technisches Problem die Bereitstellung eines Verfahrens der eingangs genannten Art zugrunde, mit dem eine Anlage zur Wasserdampfreformierung eines Kohlenwasserstoffs möglichst rasch auf ihre Betriebstemperatur gebracht und dadurch entsprechend schnell Wasserstoff bereitgestellt werden kann.

Die Erfindung löst dieses Problem durch die Bereitstellung eines Verfahrens mit den Merkmalen des Anspruchs 1. Bei diesem Verfahren wird wenigstens ein Teil des Reformierungsreaktors als Mehrfunktions-Reaktoreinheit eingesetzt, und zwar bei einem Kaltstart während einer ersten Betriebsphase in einer ersten Funktion als katalytische Brennereinheit und während einer anschließenden zweiten Betriebsphase in einer zweiten Funktion als sogenannte POX-Einheit, d.h. einer Einheit zur partiellen Oxidation des zugeführten Kohlenwasserstoffs.

Die durch die katalytische Verbrennung in der ersten Betriebsphase in dieser Mehrfunktions-Reaktoreinheit erzeugte Verbrennungswärme dient zur Aufheizung wenigstens einer nachgeschalteten Anlageneinheit, z.B. einem anschließenden Teil des Reformierungsreaktors und/oder einem anschließenden CO-Oxidator, und wird durch das heiße Verbrennungsabgas und/oder durch Wärmeleitung dorthin transportiert. Die anfängliche Funktion als katalytische Brennereinheit sorgt für eine rasche erste Aufheizung der Anlage. Die in der anschließenden zweiten Betriebsphase stattfindende partielle Oxidation des Kohlenwasserstoffs verläuft exotherm und erzeugt daher weitere Wärme zur Anlagenaufheizung. Gleichzeitig wird in dieser Betriebsphase bereits Wasserstoff erzeugt und steht damit beispielsweise für die Brennstoffzellen eines Kraftfahrzeugs zur Verfügung, bevor dann nach Erreichen einer entsprechenden Betriebstemperatur der Anlage die endotherme Wasserdampfreformierungsreaktion ablaufen kann und weiteren Wasserstoff bereitstellt. Dabei kann gleichzeitig mit der Reformierungsreaktion oder abwechselnd mit dieser eine partielle Oxidationsreaktion stattfinden, um z.B. eine autotherme Prozeßführung zu realisieren, wenn hierfür Bedarf besteht.

Des weiteren beinhaltet das Verfahren eines oder mehrere der drei folgenden Maßnahmen. Erstens kann vorgesehen sein, kurz vor dem Übergang von der ersten auf die zweite Betriebsphase dem zugeführten Gemisch aus Brennstoff und sauerstoffhaltigem Gas Wasser hinzuzufügen. Dadurch lassen sich unerwünschte Spitzenwerte an Kohlenmonoxidgehalt im Produktgasgemisch beim Übergang auf die zweite Betriebsphase vermeiden. Zudem kann das zudosierte Wasser Überhitzungszonen bei der katalytischen Verbrennung vermeiden und als Wärmeträger fungieren, um die bei der katalytischen Verbrennung entstehende Verbrennungswärme in nachgeschaltete Anlageneinheiten weiterzutransportieren. Zweitens kann eine Erhöhung des Brennstoffmengenstroms mit steigender Temperatur der Mehrfunktions-Reaktoreinheit während der ersten Betriebsphase vorgesehen werden, vorzugsweise so, daß der Anteil an unverbranntem Brennstoff im Produktgas gerade noch wünschenswert klein bleibt. Dies bedeutet, daß der Brennstoffmengenstrom in dem Maß erhöht wird, in welchem das Oxidationsvermögen der Mehrfunktions-Reaktoreinheit bezüglich ihrer katalytischen Brennerfunktion mit zunehmender Temperatur anwächst. Drittens kann vorgesehen sein, den Mengenstrom an sauerstoffhaltigem Gas schon im Verlauf der ersten Betriebsphase unterstöchiometrisch einzustellen, wodurch im Produktgas Spaltprodukte, wie Wasserstoff und dergleichen, durch thermische Zersetzung des eingesetzten Brennstoffs, gegebenenfalls im Zusammenwirken mit zudosiertem oder durch die Verbrennung entstandenem Wasser, entstehen. Diese Spaltprodukte können unter erneuter Luftzugabe verbrannt und so zur Aufheizung nachfolgender Komponenten der Reformierungsanlage genutzt werden.

Durch diese erfindungsgemäße Betriebsweise ist die beispielsweise mobil in einem brennstoffzellenbetriebenen Kraftfahrzeug eingebaute Anlage in der Lage, sehr schnell nach dem Starten Wasserstoff zu liefern und sich rasch auf die für die Wasserdampfreformierungsreaktion notwendige Betriebstemperatur aufzuheizen.

Bei einem nach Anspruch 2 weitergebildeten Verfahren dient der als Mehrfunktions-Reaktoreinheit eingesetzte Teil des Reformierungsreaktors nach Abschluß einer Kaltstartphase im anschließenden Normalbetrieb bei warmgelaufener Anlage in einer dritten Funktion wenigstens zeitweise als Reformereinheit zur Wasserdampfreformierung des zugeführten Kohlenwasserstoffs und/oder CO-Shifteinheit zur Umwandlung von unerwünschtem Kohlenmonoxid in Kohlendioxid.

Bei einem nach Anspruch 3 weitergebildeten Verfahren wird bereits nach wenigen Sekunden von der ersten auf die zweite Betriebsphase übergegangen, so daß dementsprechend bereits nach wenigen Sekunden Wasserstoff in merklichen Mengen durch die partielle Oxidationsreaktion geliefert werden kann.

Bei einem nach Anspruch 4 weitergebildeten Verfahren wird als Brennstoff für die katalytische Verbrennung in der Mehrfunktions-Reaktoreinheit während der ersten Betriebsphase der zu reformierende Kohlenwasserstoff oder Wasserstoff verwendet. Dies hat den Vorteil, daß der Brennstoff ohne weiteres zur Verfügung steht, da der zu reformierende Kohlenwasserstoff ohnehin in einem Speicher bevorratet ist und der Wasserstoff z.B. während eines vorangegangenen aktiven Betriebs der Anlage erzeugt wird und ein Teil davon für diese spätere Verwendung zwischengespeichert werden kann.

Bei einem nach Anspruch 5 weitergebildeten Verfahren dient ein eingangsseitiger Teil des Reformierungsreaktors als die Mehrfunktions-Reaktoreinheit, während der übrige Reformierungsreaktorteil während der zweiten Betriebsphase wenigstens bereichsweise als Nachreformierungs- und CO-Shiftkonverterstufe fungiert. Dadurch werden die in der vorgeschalteten Mehrfunktions-Reaktoreinheit eventuell nicht umgesetzten Kohlenwasserstoffanteile in diesem ausgangsseitigen Reformierungsreaktorteil vollends umgesetzt und gleichzeitig das während der Umsetzung in diesem Reaktorteil und in der vorgeschalteten Mehrfunktions-Reaktoreinheit entstandene Kohlenmonoxid durch die sogenannte CO-Shiftreaktion mit Wasser zu Kohlendioxid umgesetzt. Ein zu hoher CO-Anteil im Produktgas des Reformierungsreaktors ist bei Anwendungen in Verbindung mit Brennstoffzellen unerwunscht, da das Kohlenmonoxid in den Brennstoffzellen als Katalysatorgift wirkt.

Bei einem nach Anspruch 6 weitergebildeten Verfahren wird während der zweiten Betriebsphase Wasser in einem höheren Maß zudosiert als im anschließenden Normalbetrieb bei warmgelaufener Anlage. Dies verbessert den Wärmetransport und verringert gegenüber dem Normalbetrieb den CO-Anteil im Prozeßgas.

Bei einem nach Anspruch 7 weitergebildeten Verfahren wird das aus dem Reformierungsreaktor austretende Stoffgemisch durch einen nachgeschalteten CO-Oxidator hindurchgeführt, der somit schon in der ersten Betriebsphase durch das Verbrennungsgas der katalytischen Verbrennung in der Mehrfunktions-Reaktoreinheit aufgeheizt wird und in der zweiten Betriebsphase schon im wesentlichen seine normale Funktion erfüllt. Letztere besteht darin, im durchgeführten Stoffgemisch gegebenenfalls noch vorhandenes Kohlenmonoxid zu Kohlendioxid zu oxidieren. Zusätzlich wird der CO-Oxidator in der ersten Betriebsphase durch einen eigenen katalytischen Verbrennungsprozeß beheizt. Dazu wird in den CO-Oxidator zusätzlich ein Brennstoff und ein sauerstoffhaltiger Gasstrom eingeleitet.

Bei einem nach Anspruch 8 weitergebildeten Verfahren wird ein dem Reformierungsreaktor und/oder einem diesem vorgeschalteten Verdampfer zugeordneter katalytischer Brenner ab der zweiten Betriebsphase wenigstens teilweise von dem im Reformierungsreaktor gebildeten, wasserstoffhaltigen Produktgas gespeist, wobei dieses optional zunächst durch zwischenliegende Anlagenkomponenten, wie einen CO-Oxidator und den Anodenteil eines Brennstoffzellensystems, hindurchgeführt wird. Soweit das laufend erzeugte Produktgas nicht als Brennstoff ausreicht, kann dem katalytischen Brenner zwischengespeicherter Wasserstoff oder der auch zur Reformierung verwendete Kohlenwasserstoff als Brennstoff zugeführt werden.

Vorteilhafte Ausführungsformen der Erfindung werden nachfolgend unter Bezugnahme auf die Zeichnung beschrieben.

Die einzige Figur zeigt ein Blockdiagramm einer erfindungsgemäß betreibbaren Anlage zur Wasserdampfreformierung von Methanol zwecks Wasserstoffgewinnung für ein Brennstoffzellensystem.

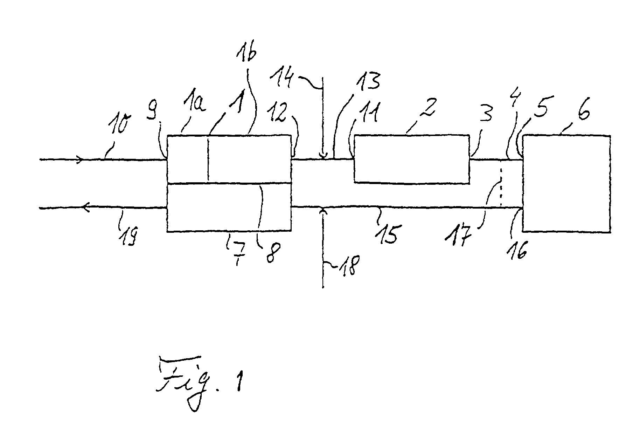

Die in Fig. 1 blockdiagrammatisch gezeigte Anlage zur Wasserdampfreformierung von Methanol eignet sich für den mobilen Einsatz in einem brennstoffzellenbetriebenen Kraftfahrzeug zur Bereitstellung des für die Brennstoffzellen benötigten Wasserstoffs aus flüssig mitgeführtem Methanol. Die Anlage beinhaltet, soweit hier primär von Interesse, einen Reformierungsreaktor 1, einen diesem nachgeschalteten CO-Oxidator 2, dessen Auslaß 3 über eine Wasserstoffspeiseleitung 4 mit dem Einlaß 5 des Anodenteils 6 eines Brennstoffzellensystems verbunden ist, sowie einen katalytischen Brenner 7, der über eine wärmeleitende Trennwand 8 in Wärmekontakt mit dem Reaktor 1 steht. Der Reformierungsreaktor 1 ist mit einem Einlaß 9 an eine Reaktorzufuhrleitung 10 angeschlossen, während der CO-Oxidator 2 mit seinem Einlaß 11 an den Reaktorauslaß 12 angeschlossen ist. In die zugehörige Verbindungsleitung 13 mündet eine erste Zwischeneinspeiseleitung 14. Der katalytische Brenner 7 ist eingangsseitig an eine Brennstoffzufuhrleitung 15 angeschlossen, die von einem Auslaß 16 des Brennstoffzellen-Anodenteils 6 abfuhrt. Optional ist eine Bypass-Leitung 17 vorgesehen, über die bei Bedarf der den CO-Oxidator 2 verlassende Gasstrom unter Umgehung des Brennstoffzellen-Anodenteils 6 direkt in die Brennstoffzufuhrleitung 15 eingespeist werden kann. Über eine zweite Zwischeneinspeiseleitung 18 kann zusätzlich, soweit erforderlich, Methanol und ein sauerstoffhaltiges Gas in die Brennstoffzufuhrleitung 15 eingespeist werden. Das Verbrennungsabgas des katalytischen Brenners 7 wird über eine Abgasleitung 19 abgeführt.

Der Reformierungsreaktor 1 ist in eine eingangsseitige Mehrfunktions-Reaktoreinheit la und den ubrigen, ausgangsseitigen Reaktorteil 1b aufgeteilt. Beide Reaktorteile 1a, 1b beinhalten ein geeignetes Katalysatormaterial, z.B. ein Cu/ZnO-Material. Die eingangsseitige Mehrfunktions-Reaktoreinheit la kann je nach Eduktzusammensetzung, d.h. je nach Zusammensetzung des über den Einlaß 9 eingeleiteten Stoffgemischs, als katalytische Brennereinheit, als partielle Oxidatoreinheit, d.h. als sogenannte POX-Einheit, oder als reine Reformereinheit arbeiten. In ihren Funktionsweisen als katalytische Brennereinheit und als POX-Einheit ist die Mehrfunktions-Reaktoreinheit la kaltstartfähig, da in diesen Betriebsarten exotherme katalytische Reaktionen ablaufen. Darüber hinaus ist der reaktorexterne, mit dem Reaktor 1 über die gasdichte Tennwand 8 in Wärmekontakt stehende katalytische Brenner 7 kaltstartfähig. Bei Bedarf kann auch der CO-Oxidator 2 kaltstartfähig ausgelegt sein.

Die solchermaßen aufgebaute Anlage ist durch Wahl eines geeigneten Betriebsverfahrens bei einem Kaltstart in der Lage, bereits nach einer sehr kurzen Zeitdauer Wasserstoff zu liefern, so daß das Brennstoffzellensystem entsprechend rasch Antriebsleistung bereitzustellen vermag, ohne daß hierzu entsprechend hohe Wasserstoffmengen aus vorangegangenen Betriebszyklen zwischengespeichert werden müssen. Hierzu ist vorzugsweise folgendes Betriebsverfahren vorgesehen.

Nach Auslösen eines Starts der Anlage, z.B. durch Auslosen eines Fahrzeugstarts, wird zunächst eine erste Betriebsphase aktiviert, die nur wenige Sekunden andauert. In dieser ersten Betriebsphase wird die Mehrfunktions-Reaktoreinheit la als katalytische Brennereinheit betrieben, wozu ihr flüssiges Methanol oder, falls vorhanden, zwischengespeicherter Wasserstoff als Brennstoff und zudem ein sauerstoffhaltiges Gas, z.B. Luft, zugeführt wird. Der Sauerstoffanteil wird dabei ausreichend hoch gewählt, so daß in der Mehrfunktions-Reaktoreinheit la die gewünschte vollständige katalytische Verbrennung des Methanols bzw. Wasserstoffs abläuft. Auf Wunsch kann hierbei die zugeführte Menge an sauerstoffhaltigem Gas und damit der Sauerstoffanteil auch unterstöchiometrisch eingestellt werden, wodurch im Produktgas durch thermische Zersetzung des Methanols, gegebenenfalls unter reaktiver Beteiligung von zudosiertem oder durch die Verbrennung gebildetem Wasser, Spaltprodukte gebildet werden, die unter erneuter Zugabe eines sauerstoffhaltigen Gases zur Aufheizung nachfolgender Anlagenkomponenten oxidiert werden können. Bei Bedarf kann zur Aktivierung der Verbrennungsreaktion eine kurzzeitige elektrische Vorheizung vorgesehen sein.

Die durch die katalytische Verbrennung entstehende Wärme heizt die Mehrfunktions-Reaktoreinheit la rasch auf. Ebenso rasch heizt sich der übrige Reaktorteil 1b über Wärmeleitung und das heiße, hindurchgeleitete Verbrennungsabgas der katalytischen Verbrennung im eingangsseitigen Reaktorteil la auf. Die Aufheizung der Mehrfunktions-Reaktoreinheit la kann weiter dadurch beschleunigt werden, daß der Brennstoffmengenstrom, d.h. die Menge an zugeführtem Methanol, während der ersten Betriebsphase kontinuierlich mit steigender Temperatur des oxidierenden Bereichs der Mehrfunktions-Reaktoreinheit la so erhöht wird, wie dies gerade noch nicht zu einem merklichen Anteil an unverbranntem Brennstoff im Produktgas führt. Damit wird das mit zunehmender Temperatur steigende katalytische Verbrennungsvermögen der Mehrfunktions-Reaktoreinheit la optimal genutzt. Zusätzlich wird der gesamte Reaktor 1 durch gleichzeitige Aktivierung des reaktorexternen katalytischen Brenners 7 uber die wärmeleitende Trennwand 8 aufgeheizt. Zur Aktivierung des Brenners 7 wird ebenfalls flüssiges Methanol und/oder Wasserstoff sowie ein sauerstoffhaltiges Gas in geeignetem Anteil über die zweite Zwischeneinspeiseleitung 18 in die Brennstoffzufuhrleitung 15 für den Brenner 7 eingespeist.

Der CO-Oxidator 2 wird zum einen durch das hindurchtretende, heiße Verbrennungsgas der katalytischen Verbrennung in der Mehrfunktions-Reaktoreinheit la passiv erhitzt. Zusätzlich ist vorzugsweise eine aktive Beheizung desselben dadurch vorgesehen, daß auch in ihm ein katalytischer Verbrennungsprozeß durchgeführt wird. Das üblicherweise in einem solchen CO-Oxidator zur Erfüllung von dessen CO-Oxidationsfunktion im normalen Reformierungsbetrieb der Anlage enthaltene Katalysatormaterial eignet sich auch für die Katalysierung eines solchen flammenlosen Verbrennungsprozesses. Dazu wird über die erste Zwischeneinspeiseleitung 14 wiederum flüssiges Methanol und/oder Wasserstoff sowie ein ausreichender Anteil eines sauerstoffhaltigen Gases in den CO-Oxidator 2 eingespeist, wo dieses Gemisch katalytisch verbrannt wird. Bei Bedarf kann auch im CO-Oxidator 2 und/oder im reaktorexternen katalytischen Brenner 7 eine kurzzeitige elektrische Vorheizung zum Starten des katalytischen Verbrennungsprozesses vorgesehen sein. Falls die in dieser ersten Betriebsphase entstehenden Verbrennungsgase aus dem Reaktor 1 und dem CO-Oxidator 2 keine nachteilige Auswirkung auf das Startverhalten des Brennstoffzellensystems in der anschließenden Betriebsphase haben, werden sie in den Anodenteil 6 desselben eingespeist und erhohen dort die Temperatur. Ansonsten können sie über die dazu vorgesehene Bypass-Leitung 17 am Brennstoffzellensystem vorbeigeleitet werden.

Sobald die Mehrfunktions-Reaktoreinheit la nach den wenigen Sekunden der ersten Betriebsphase eine ausreichend erhöhte Temperatur aufweist, wird zu einer anschließenden zweiten Betriebsphase ubergegangen, in der dieser Reaktorteil la als POX-Einheit betrieben wird. Durch die dann stattfindende, exotherm verlaufende partielle Oxidation ist keine weitere Wärmezufuhrung von außen mehr notwendig. Gleichzeitig wird ab diesem Zeitpunkt durch die partielle Oxidation bereits Wasserstoff erzeugt. Um die geeigneten Bedingungen zur Durchführung der partiellen Oxidationsreaktion einzustellen, wird das Stoffmengenverhaltnis von sauerstoffhaltigem Gas zu Methanol fur das in die Mehrfunktions-Reaktoreinheit la eingeleitete Stoffgemisch gegenüber der ersten Betriebsphase verringert. Das Stoffmengenverhältnis Wasser zu Methanol ist verglichen mit dem anschließenden Normalbetrieb bei warmgelaufener Anlage vorzugsweise erhöht, um dadurch den Wärmetransport zu begünstigen und den CO-Anteil im Reformatgas gering zu halten. Der Gesamteduktstrom wird so nachgeregelt, daß der Methanolumsatz durch die partielle Methanoloxidation stets groß genug ist. Ein zu geringer Methanolumsatz würde die Funktion der Brennstoffzelle stören oder könnte von dem nachgeschalteten katalytischen Brenner 7 nicht bewältigt werden, was zu unerwünschten Methanolemissionen führen würde. Die entnehmbare Leistung der Anlage ist daher in dieser Betriebsphase begrenzt, es steht jedoch immerhin bereits wenige Sekunden nach Anlagenstart eine gewisse Leistung durch die Anlage zur Verfügung.

Um Kohlenmonoxid-Gehaltsspitzen beim Ubergang von der ersten auf die zweite Betriebsphase zu vermeiden, ist vorzugsweise vorgesehen, der Mischung aus Brennstoff und sauerstoffhaltigem Gas schon in der ersten Betriebsphase, und zwar erst kurz vor deren Ende, Wasser hinzuzugeben. Durch das in die Mehrfunktions-Reaktoreinheit la zudosierte Wasser können zudem Überhitzungszonen bei der katalytischen Verbrennung vermieden werden, und das zudosierte Wasser kann als Warmetrager zum Weitertransport der in der Mehrfunktions-Reaktoreinheit la erzeugten Wärme in die nachgeschalteten Anlageneinheiten fungieren.

Der ausgangsseitige Reaktorteil 1b wird während der zweiten Betriebsphase als Nachreformierungs- und CO-Shiftkonverterstufe verwendet, jedenfalls bereichsweise in denjenigen Zonen, die hierfur schon heiß genug sind. Durch die Shiftkonverterfunktion wird Kohlenmonoxid, das in einem gewissen Anteil bei der partiellen Methanoloxidation und der Wasserdampfreformierungsreaktion von Methanol entsteht, mit Wasser uber das Wassergas-Gleichgewicht in Kohlendioxid umgewandelt. Der CO-Oxidator 2 arbeitet in der zweiten Betriebsphase schon annähernd normal, wobei beim Übergang von der ersten zur zweiten Betriebsphase die katalytische Verbrennung im CO-Oxidator 2 beendet und stattdessen die CO-Oxidationsreaktion begonnen wird, indem die Zufuhr von Methanol und/oder Wasserstoff über die erste Zwischeneinspeiseleitung 14 gestoppt und stattdessen nur noch ein sauerstoffhaltiger Gasstrom, z.B. Luft, eingeleitet wird. Da somit der CO-Oxidator 2 in der Lage ist, gegebenenfalls noch im Produktgasstrom des Reformierungsreaktors 1 enthaltenes Kohlenmonoxid bis auf unschädliche Anteile zu oxidieren, kann spätestens in dieser zweiten Betriebsphase das Produktgas, d.h. das Reformatgas, in den Anodenteil 6 des Brennstoffzellensystems eingeleitet werden. Der katalytische Brenner 7 wird mit Wasserstoff, den den Anodenteil ungenutzt verläßt, weiterbetrieben, um den Reformierungsreaktor 1, soweit erforderlich, auf Temperatur zu halten. Dabei kann der katalytische Brenner 7 in nicht gezeigter Weise zusätzlich zur Beheizung eines Verdampfers dienen, der dem Reformierungsreaktor 1 vorgeschaltet ist. Falls erforderlich, wird dem katalytischen Brenner 7 neben dem vom Brennstoffzellen-Anodenteil 6 kommenden Wasserstoff weiterhin noch Brennstoff in Form von Methanol oder Wasserstoff über die zweite Zwischeneinspeiseleitung 18 zugeführt.

Die Anlage wird in dieser zweiten Betriebsphase betrieben, bis alle Anlagenkomponenten auf ihrer Betriebstemperatur sind. Dann wird die warmgelaufene Anlage auf Normalbetrieb umgestellt, in welchem die Wasserdampfreformierungsreaktion abläuft. Dazu wird dem Reformierungsreaktor 1 das zu reformierende Methanol-/Wasserdampfgemisch zugeführt, das vom vorgeschalteten Verdampfer aus dem flüssig bevorrateten Methanol und Wasser bereitet wird. Die eingangsseitige Mehrfunktions-Reaktoreinheit la arbeitet dann als Reformereinheit, solange dies die Temperaturverhältnisse zulassen. Auch der übrige Reaktorteil 1b fungiert nun als Reformerstufe. Im erzeugten Reformatgas enthaltenes Kohlenmonoxid wird im nachgeschalteten CO-Oxidator in ausreichendem Maß oxidiert, so daß nun ein im wesentlichen aus Wasserstoff bestehender, weitestgehend CO-freier Gasstrom in ausreichender Menge dem Brennstoffzelen-Anodenteil 6 zugeführt werden kann, um durch das Brennstoffzellensystem die benötigte Antriebsleistung des Fahrzeugs erzeugen zu können.

Wenn die verfügbare Wärmeleistung, speziell bei dynamischen Betriebsfällen, nicht groß genug ist, kann die Mehrfunktions-Reaktoreinheit la zeitweise im POX-Betrieb gefahren werden, um durch die entsprechende partielle Methanoloxidationsreaktion Wärme bereitzustellen. Je nach Bedarf kann daher die Mehrfunktions-Reaktoreinheit la im Normalbetrieb als POX-Einheit exotherm oder als Reformereinheit endotherm gefahren werden. Der jeweilige Betriebsmodus läßt sich anhand des Anteils an zugeführtem sauerstoffhaltigem Gas einstellen. Mehr Sauerstoff begünstigt die partielle Oxidation, weniger Sauerstoff die Reformierungsreaktion. Insbesondere ist bei Bedarf auch eine autotherme Prozeßführung realisierbar, indem das Maß an partieller Oxidation gerade so groß eingestellt wird, daß die dadurch erzeugte Warme den übrigen Wärmebedarf der Anlage deckt. Der katalytische Brenner 7 braucht daher nicht allein die erforderliche Wärme zu erzeugen. Inbesondere braucht im Normalbetrieb im allgemeinen kein Methanol oder Wasserstoff mehr über die zweite Zwischeneinspeiseleitung 18 zugeführt werden.

## Patentansprüche

1. Verfahren zum Betrieb einer Anlage zur Wasserdampfreformierung einer Kohlenwasserstoff- oder Kohlenwasserstoffderivat-Ausgangssubstanz mit einem Reformierungsreaktor (1), bei dem
- bei warmgelaufener Anlage im Reformierungsreaktor die zu reformierende Ausgangssubstanz eine Wasserdampfreformierung erfährt und
- beim Kaltstart der Anlage wenigstens ein Teil (la) des Reformierungsreaktors (1) als Mehrfunktions-Reaktoreinheit in einer ersten Betriebsphase als katalytische Brennereinheit unter Zufuhr eines Brennstoffs und eines sauerstoffhaltigen Gases und in einer anschließenden zweiten Betriebsphase als POX-Einheit zur partiellen Oxidation der Ausgangssubstanz betrieben wird,
- kurz vor dem Übergang von der ersten auf die zweite Betriebsphase dem zugeführten Gemisch aus Brennstoff und sauerstoffhaltigem Gas Wasser zudosiert wird und/oder
- der Brennstoffmengenstrom während der ersten Betriebsphase mit steigender Temperatur der Mehrfunktions-Reaktoreinheit erhöht wird und/oder
- der Mengenstrom an sauerstoffhaltigem Gas schon während der ersten Betriebsphase unterstöchiometrisch eingestellt wird.

2. Verfahren nach Anspruch 1, weiter
**dadurch gekennzeichnet, daß**
der als Mehrfunktions-Reaktoreinheit betriebene Reformierungsreaktorteil (1a) anschließend an den Kaltstart bei warmgelaufener Anlage wenigstens zeitweise als Reformereinheit zur Wasserdampfreformierung der Ausgangssubstanz und/oder als CO-Shifteinheit betrieben wird.

3. Verfahren nach Anspruch 1 oder 2, weiter
**dadurch gekennzeichnet, daß**
bereits wenige Sekunden nach Beginn der ersten Betriebsphase auf die zweite Betriebsphase ubergegangen wird.

4. Verfahren nach einem der Ansprüche 1 bis 3, weiter
**dadurch gekennzeichnet, daß**
als Brennstoff für die katalytische Verbrennung in der Mehrfunktions-Reaktoreinheit (1a) während der ersten Betriebsphase die zu reformierende Ausgangssubstanz oder Wasserstoff verwendet wird.

5. Verfahren nach einem der Ansprüche 1 bis 4, weiter
**dadurch gekennzeichnet, daß**
als die Mehrfunktions-Reaktoreinheit ein eingangsseitiger Teil (la) des Reformierungsreaktors (1) verwendet wird und der ubrige Teil (1b) des Reformierungsreaktors während der zweiten Betriebsphase wenigstens bereichsweise als Nachreformierungs- und CO-Shiftkonverterstufe fungiert.

6. Verfahren nach einem der Anspruche 1 bis 5, weiter
**dadurch gekennzeichnet, daß**
während der zweiten Betriebsphase Wasser in einem höheren Wasser/Ausgangssubstanz-Verhältnis zudosiert wird als anschließend bei warmgelaufender Anlage.

7. Verfahren nach einem der Ansprüche 1 bis 6, weiter
**dadurch gekennzeichnet, daß**
das aus dem Reformierungsreaktor (1) austretende Produktgas einem CO-Oxidator (2) zugeführt wird, dem in der ersten Betriebsphase zusätzlich ein Gemisch aus einem Brennstoff und einem sauerstoffhaltigen Gas zwecks katalytischer Verbrennung und in der zweiten Betriebsphase ein sauerstoffhaltiger Gasstrom zur Oxidation von im Produktgas des Reformierungsreaktors (1) enthaltenem Kohienmonoxid zugefuhrt wird.

8. Verfahren nach einem der Ansprüche 1 bis 7, weiter
**dadurch gekennzeichnet, daß**
ein mit dem Reformierungsreaktor (1) in Wärmekontakt stehender katalytischer Brenner (7) in der ersten Betriebsphase von einem zugeführten Brennstoff/Sauerstoff-Gemisch und anschließend mindestens teilweise vom Produktgas des Reformierungsreaktors (1) gespeist wird.

## Claims

1. Method for operating a system for the steam reforming of a hydrocarbon or hydrocarbon derivative starting substance by means of a reforming reactor (1), in which
- when the system has warmed up, the starting substance to be reformed undergoes steam reforming in the reforming reactor, and
- during the cold-starting of the system, at least part (1a) of the reforming reactor (1) is operated as a multi-function reactor unit in a first operating phase as a catalytic burner unit, a fuel and an oxygen-containing gas being delivered, and in a subsequent second operating phase as a POX unit for the partial oxidation of the starting substance,
- shortly before the transition from the first to the second operating phase, water is added to the delivered mixture of fuel and oxygen-containing gas and/or
- the fuel flow rate is increased, during the first operating phase, with a rising temperature of the multi-function reactor unit and/or
- the flow rate of oxygen-containing gas is set substoichiometrically as early as during the first operating phase.

2. Method according to Claim 1, further characterized in that the reforming reactor part (1a) operated as a multi-function reactor unit is operated subsequently to the cold start, when the system has warmed up, at least temporarily as a reformer unit for the steam reforming of the starting substance and/or as a CO shift unit.

3. Method according to Claim 1 or 2, further characterized in that a transition is made to the second operating phase only a few seconds after the commencement of the first operating phase.

4. Method according to one of Claims 1 to 3, further characterized in that the starting substance to be reformed or hydrogen is used as fuel for catalytic combustion in the multi-function reactor unit (1a) during the first operating phase.

5. Method according to one of Claims 1 to 4, further characterized in that an inlet-side part (1a) of the reforming reactor (1) is used as the multi-function reactor unit, and, during the second operating phase, the remaining part (1b) of the reforming reactor functions, at least in some regions, as a post-reforming and CO shift converter stage.

6. Method according to one of Claims 1 to 5, further characterized in that water is added in a higher water/starting-substance ratio during the second operating phase than subsequently when the system has warmed up.

7. Method according to one of Claims 1 to 6, further characterized in that the product gas emerging from the reforming reactor (1) is delivered to a CO oxidizer (2), to which a mixture of a fuel and of an oxygen-containing gas is additionally delivered in the first operating phase for the purpose of catalytic combustion and an oxygen-containing gas stream is delivered in the second operating phase for the oxidation of carbon monoxide contained in the product gas of the reforming reactor (1).

8. Method according to one of Claims 1 to 7, further characterized in that a catalytic burner (7) which is in thermal contact with the reforming reactor (1) is fed with a delivered fuel/oxygen mixture in the first operating phase and subsequently, at least partially, with the product gas of the reforming reactor (1).

## Revendications

1. Procédé de fonctionnement d'une installation pour le reformage à la vapeur d'eau d'une substance initiale, constituée d'un hydrocarbure ou d'un dérivé d'hydrocarbure, avec un réacteur de reformage (1), pour lequel :
- lorsque l'installation fonctionne à chaud, la substance initiale à reformer subit un processus de reformage à la vapeur d'eau dans le réacteur de reformage, et
- au démarrage à froid, l'installation, pour au moins une partie (1a) du réacteur de reformage (1), constitué sous la forme d'un ensemble réacteur multifonctionnel, fonctionne, dans une première phase de fonctionnement, en tant qu'unité à brûleur catalytique, avec apport d'un combustible et d'un gaz contenant de l'oxygène et, dans une deuxième phase de fonctionnement, subséquente, fonctionne en unité POX, pour effectuer l'oxydation partielle de la substance initiale.
- peu avant le passage de la première à la deuxième phase de fonctionnement, on ajoute de façon dosée de l'eau au mélange amené, constitué de combustible et d'un gaz contenant de l'oxygène et/ou
- le débit masse de combustible est augmenté pendant la première phase de fonctionnement, avec augmentation de la température de l'ensemble réacteur multifonctionnel, et/ou
- le débit masse de gaz contenant de l'oxygène est réglé de façon sous-stoechiométrique, déjà pendant -la première phase de fonctionnement.

2. Procédé selon la revendication 1, caractérisé en outre en ce que la partie réacteur de reformage (1a), fonctionnant en ensemble réacteur multifonctionnel, fonctionne suite au démarrage à froid, lorsque l'installation fonctionne à chaud, au moins partiellement en ensemble reformeur pour procéder au reformage à la vapeur d'eau de la substance initiale et/ou en tant qu'unité Shift CO.

3. Procédé selon la revendication 1 ou 2, caractérisé en ce que déjà quelques secondes après le début de la première phase de fonctionnement, on procède au passage à la deuxième phase de fonctionnement.

4. Procédé selon l'une des revendication 1 à 3, caractérisé en outre en ce que l'on utilise comme combustible pour la combustion catalytique dans l'ensemble réacteur multifonctionnel (1a) pendant la première phase de fonctionnement, la substance initiale à reformer, ou de l'hydrogène.

5. Procédé selon l'une des revendications 1 à 4, caractérisé en outre en ce que l'on utilise, à titre d'ensemble réacteur multifonctionnel, une partie (1a), située côté entrée, du réacteur de reformage (1) et la partie (1b) restante du réacteur de reformage fait fonction, pendant la deuxième phase de fonctionnement, au moins par zones, d'étage de post-reformage et d'étage de convertisseur Schift CO.

6. Procédé selon l'une des revendications 1 à 5, caractérisé en outre en ce que, pendant la deuxième phase de fonctionnement, on ajoute de façon dosée de l'eau en un rapport eau/substance initiale plus élevée qu'ensuite, lorsque l'installation fonctionne à chaud.

7. Procédé de fonctionnement selon l'une des revendications 1 à 6, caractérisé en outre en ce que le gaz de produit, sortant du réacteur de reformage (1), est amené à un oxydateur de CO (2) auquel est amené, dans la première phase de fonctionnement en plus un mélange constitué d'un combustible et d'un gaz contenant de l'oxygène, dans un but de combustion catalytique et, dans la deuxième phase de fonctionnement, un flux gazeux contenant de l'oxygène, pour opérer l'oxydation du monoxyde de carbone contenu dans le gaz de produit émanant du réacteur de reformage (1).

8. Procédé selon l'une des revendications 1 à 7, caractérisé en ce qu'un brûleur catalytique (7), mis en contact thermique avec le réacteur de reformage (1), est alimenté dans la première phase de fonctionnement par un mélange combustible/oxygène amené et, ensuite, au moins partiellement par du gaz de production émanant du réacteur de reformage (1).
